# EUROPÄISCHE PATENTSCHRIFT

(11) **EP 3 265 199 B1**
(45) Veröffentlichungstag und Bekanntmachung des Hinweises auf die Patenterteilung: **09.01.2019**
(21) Anmeldenummer: 16716001.9
(22) Anmeldetag: 03.03.2016
(51) Int. Cl.: B01D 19/00, F24D 19/08

(54) **VORRICHTUNG ZUR ENTGASUNG EINER FLÜSSIGKEIT**
DEVICE FOR DEGASSING A LIQUID
DISPOSITIF POUR UN DÉGAZAGE D'UN LIQUIDE

(30) Priorität: 03.03.2015 CH 2882015
(43) Veröffentlichungstag der Anmeldung: 10.01.2018
(73) Patentinhaber: IMI Hydronic Engineering Switzerland AG, 4414 Füllinsdorf (CH)
(72) Erfinder: THESING, Christian, 79713 Bad Säckingen (DE); SCHERRER, Alain, 4132 Muttenz (CH)
(74) Vertreter: Bohest AG
(86) Internationale Anmeldenummer: PCT/CH2016/000040
(87) Internationale Veröffentlichungsnummer: WO 2016/138599

(56) Entgegenhaltungen:
- EP-A1- 0 027 179
- EP-A1- 0 652 406
- EP-A1- 0 791 161
- EP-A2- 1 102 012
- EP-A2- 1 811 084
- EP-A2- 2 072 823

## Beschreibung

Die Erfindung betrifft eine Vorrichtung zur Entgasung einer Flüssigkeit aus einem flüssigkeitsführenden Heizungs- oder Kühlkreislauf oder einer Nachspeiseleitung zum Heizungs- oder Kühlkreislauf, wie sie im Oberbegriff des unabhängigen Patentanspruchs 1 definiert ist und ein Verfahren zur Entgasung einer Flüssigkeit aus einem flüssigkeitsführenden Heizungs- oder Kühlkreislauf oder einer Nachspeiseleitung zum Heizungs- oder Kühlkreislauf, wie es im Oberbegriff des unabhängigen Patentanspruchs 6 definiert ist.

Es ist unvermeidlich, dass z.B. in Heizungsnetzen, in Folge von Undichtheiten oder dergleichen, neben dem eigentlichen Wärmeträger, z.B. dem Heizungswasser, auch Luft (Sauerstoff und Stickstoff) oder andere Gase auftreten, welche zu Zirkulationsstörungen oder gar zu Korrosionsschäden sowie zu unerwünschter Geräuschbildung im Heizungs- oder Kühlsystem und im Heisswassererzeuger führen können.

Vorrichtung und Verfahren zur Entgasung von Flüssigkeiten durch Unterdruckentgasung werden in erster Linie dazu verwendet, die in der Flüssigkeit, insbesondere Wasser oder Wassergemische, gelösten Gase, insbesondere Stickstoff, in die Aussenumgebung auszuscheiden, unter anderem um Zirkulationsstörungen, sowie eine Korrosion der Leitungen des Systems zu verhindern. Solche Entgasungsvorrichtungen werden z.B. in Heizungs- oder Kühlsystemen eingesetzt.

Die Unterdruckentgasung beruht auf dem Prinzip, dass sich die Löslichkeitsfähigkeit von Gasen in einer Flüssigkeit mit steigendem Druck erhöht und durch Absenken des Druckes daher in der Flüssigkeit gelöstes Gas in Form von unterschiedlich grossen Blasen aus der Flüssigkeit wiederrum desorbiert wird.

In der europäischen Patentanmeldung Nr. 0 652 406 A1 sind ein Verfahren und eine Vorrichtung zur Entlüftung einer Flüssigkeit aus einem Flüssigkeitszirkulationssystem beschrieben. Bei diesem Verfahren wird dem Zirkulationssystem eine gewisse Menge an Flüssigkeit entnommen und über eine Speiseleitung, welche ein abwechslungsweise offenes und geschlossenes Absperrventil enthält, einem geschlossenen Entlüftungsbehälter zugeführt. Mittels einer kontinuierlich laufenden Umwälzpumpe wird im Entlüftungsbehälter bei geschlossenem Absperrventil ein Unterdruck erzeugt, so dass in der Flüssigkeit gelöste Luft freigesetzt wird und in den oberen Teil des Entlüftungsbehälters aufsteigt. Anschliessend wird durch Öffnen des Absperrventils der Druck im Entlüftungsbehälter erhöht, die freigesetzte Luft über eine Behälterentlüftungsventileinheit in die Aussenluft ausgeschieden und die Flüssigkeit abgesaugt und dem Zirkulationssystem wieder zugeführt.

Dieser Entgasungsvorgang weist jedoch eine geringe Entgasungseffizienz auf. Bei der Durchführung dieses Entgasungsvorgangs müssen daher zudem grosse Entgasungseinrichtungen verwendet werden um eine ausreichende Entgasung zu erreichen. Auch EP0791161B1 offenbart eine Vorrichtung zum Entgasen einer Flüssigkeit.

Der Erfindung liegt daher die Aufgabe zugrunde, eine Vorrichtung zum Entgasen einer gashaltigen Flüssigkeit, insbesondere für flüssigkeitsführende Heizungs- oder Kühlkreisläufe, so auszugestalten, dass eine Entgasung von Flüssigkeiten in einem Kreislauf möglichst effizient erfolgt und die Verwendung vergleichsweise kleiner Konstruktionsmitteln sichergestellt werden kann. Ein Heizungskreislauf im Sinne dieser Erfindung umfasst nicht nur im klassischen Sinne einen Kreislauf mit einem Heizkessel, sondern ebenfalls einen Solarkreislauf oder auch andere Heizkreisläufe.

Diese Aufgabe wird erfindungsgemäss durch die Vorrichtung gelöst, wie sie im unabhängigen Patentanspruch 1 definiert ist, sowie durch das Verfahren, welches im unabhängigen Patentanspruch 6 definiert ist. Vorteilhafte Ausführungsvarianten der erfindungsgemässen Vorrichtung und des erfindungsgemässen Verfahrens ergeben sich aus den abhängigen Patentansprüchen.

Das Wesen der Erfindung besteht im Folgenden: Eine Vorrichtung zur Entgasung einer Flüssigkeit aus einem flüssigkeitsführenden Heizungs- oder Kühlkreislauf oder einer Nachspeiseleitung zum Heizungs- oder Kühlkreislauf umfasst eine Entgasungseinrichtung zur Entfernung von Gas aus einer Flüssigkeit durch abwechselnde Unterdruck- und Überdruckerzeugung. Die Entgasungseinrichtung umfasst einen Entgasungsbehälter, eine Zuleitung zum Zuführen der Flüssigkeit zum Entgasungsbehälter, eine Ablaufleitung zum Abführen der Flüssigkeit vom Entgasungsbehälter, welche Ablaufleitung eine Pumpe aufweist und mit dem Heizungs- oder Kühlkreislauf verbindbar ist, und eine Entgasungsventileinheit. Die Entgasungsventileinheit an der Entgasungseinheit ermöglicht das Ausscheiden von Gas aus dem Entgasungsbehälter, verhindert jedoch das Hindurchströmen der Flüssigkeit aus dem Entgasungsbehälter sowie den Rückfluss von Gas bei Unterdruck im Entgasungsbehälter. Die Vorrichtung umfasst zudem einen Hydrozyklon zur Erzeugung einer Wirbelströmung der Flüssigkeit, welche entgast werden soll, wobei der Hydrozyklon einerseits mit der Entgasungseinrichtung und andererseits mit einer Speiseleitung zum Zuführen der Flüssigkeit verbunden ist. Die Speiseleitung ist mit dem Heizungs- oder Kühlkreislauf oder der Nachspeiseleitung verbindbar. Die Entgasungsventileinheit ermöglicht insbesondere ein Ausscheiden von Gas zur Umgebungsluft hin. Zusätzlich umfasst die Vorrichtung eine Steuereinheit zur Steuerung der Flüssigkeitszufuhr oder der Flüssigkeitsabfuhr.

Der Unterdruck wird durch die medienführende Pumpe generiert. Dies passiert dadurch, dass der Abführvolumenstrom der Pumpe grösser ist als der Zuführvolumenstrom zur Vorrichtung. Durch die Differenz in diesen Volumenströmen entsteht ein Unterdruck.

Die Pumpe ist insbesondere dazu geeignet, im Einlass Unterdruck und im Auslass Überdruck zu erzeugen. Die Pumpe kann insbesondere eine Hochdruckkreiselpumpe sein, welche für Flüssigkeiten geeignet ist.

Die Vorrichtung ist insbesondere geeignet zur Entgasung von Wasser oder von Wassergemischen, bevorzugt Gemische aus Wasser und Frostschutzmittel, insbesondere auf Glykolbasierend, insbesondere Propylenglykol und/oder Ethylenglykol. Dabei können ebenfalls bereits vorhandene gasförmige Anteile (Blasen) in der Flüssigkeit (z.B. bei einem gesättigten System) effizient abgetrennt werden.

Der Hydrozyklon wird durch eine zylinderförmige Kammer, welche einen Zyklonmantel aufweist, gebildet, bei der ein tangentialer Einlass zu einem zylindrischen Raum führt.

Dieser tangentialer Einlass kann am gleichen Ende wie der Ablass des Hydrozyklons angeordnet sein, oder aber am entgegengesetzten Ende des Hydrozyklons, bevorzugt aber am gleichen Ende wie der Ablass des Hydrozyklons.

Es hat sich in überraschender Weise gezeigt, dass eine verbesserte Entgasung von gashaltigen Flüssigkeiten erreicht werden kann, indem eine Kombination aus einem Hydrozyklon mit einer Entgasungseinrichtung verwendet wird. Zu diesem Zweck weist der Hydrozyklon eine solche Form auf, dass die zu entgasende Flüssigkeit aufgrund der Strömungsumlenkung im Einlaufbereich und der damit verbundenen Umlaufströmung fliehkraftbedingt als Wirbel den Zyklonmantel entlang schraubenförmig - im Falle wo der tangentiale Eintritt und der Austritt sich am gleichen Ende des Hydrozyklons befinden - zum oberen Deckel des Hydrozyklons oder - im Falle wo der tangentiale Eintritt und der Austritt sich an entgegengesetzten Enden des Hydrozyklons befinden - zur Ableitung strömt.

Der verwendete Hydrozyklon bündelt die in der Flüssigkeit enthaltenen Gasblasen aufgrund ihrer Dichtedifferenz im Vergleich zur Flüssigkeit im Zentrifugalfeld. Die Blasen werden bei der Bündelung durch Verschmelzen vergrössert, das heisst, die Blasen wachsen, und erleichtern dadurch die Ausscheidung in der anschliessenden Entgasungseinrichtung.

In einer weiteren Ausführungsvariante befindet sich in der Ablaufleitung vor oder nach der Pumpe, bevorzugt nach der Pumpe, ein steuerbares Absprerrorgan. Dieses Absperrorgan ermöglicht eine Steuerung der Flüssigkeitsabfuhr aus dem Entgasungsbehälter.

In einer anderen Ausführungsvariante befindet sich vor der Speiseleitung 21 zudem ein Druckminderer und/oder ein Durchflussregler. Diese Ausführungsvariante ermöglicht es, mit einem höheren Druck im flüssigkeitsführenden Heizungs- oder Kühlkreislauf zu arbeiten.

In einer vorteilhaften Ausführungsvariante ist in der Speiseleitung eine Druckreduzierungseinrichtung zur Gasblasenerzeugung angeordnet. Bevorzugt ist diese Druckreduzierungseinrichtung eine Querschnittsreduzierung, besonders bevorzugt eine Blende oder eine Düse.

Diese Druckreduzierungseinrichtung ist eine Einrichtung, welche eine turbulente Strömung erzeugen kann. Beispielsweise kann eine Querschnittsreduzierung verwendet werden, welche eine effiziente Entgasung der Flüssigkeit aus dem flüssigkeitsführenden Heizungs- oder Kühlkreislauf oder der Nachspeiseleitung und daher eine Verwendung kleinerer Konstruktionsmittel ermöglicht. Diese effiziente Entgasung im System erfolgt durch eine zusätzliche, gezielte Gasblasenbildung und Beschleunigung der Desorption des Gases aus der Flüssigkeit, bedingt durch die Druckreduzierungseinrichtung vor Eintritt in den Hydrozyklon. Diese Druckreduzierungseinrichtung beschleunigt ebenfalls die Gasblasenvergrösserung. Die Erzeugung einer turbulenten Strömung in der Flüssigkeit führt zu Unterdruckpunkten innerhalb der Flüssigkeit, an denen die Gasblasenbildung besonders gefördert wird. Die Verwendung einer Blende oder einer Düse zeigt besonders gute Eigenschaften bei der Gasblasenbildung und Gasblasenvergrösserung.

Vorzugsweise weist die Speiseleitung zwischen der Reduzierung, bevorzugt zwischen der Blende oder der Düse und dem Hydrozyklon einen Winkel von wenigstens 60° auf. Bevorzugt beträgt der Winkel 70° bis 120°.

Dieser Winkel in der Speiseleitung nach der Querschnittsreduzierung, der Blende oder der Düse ermöglicht überraschenderweise eine Verringerung der Lautstärke der Vorrichtung im Betrieb, insbesondere die Verringerung eines im Betrieb auftretendes Prasselgeräusch.

In einer anderen Variante weist die Vorrichtung wenigstens ein Ausdehnungsgefäss zum Druckausgleich, durch Aufnahme des Expansionsvolumens der Flüssigkeit bei thermischer Ausdehnung, auf. Das Ausdehnungsgefäss umfasst einen Balg zur Aufnahme der Flüssigkeit. Das Ausdehnungsgefäss ist über eine Druckausgleichsleitung, welche ein steuerbares Absperrorgan umfasst, mit dem Entgasungsbehälter oder mit der Ablaufleitung verbunden.

Diese Variante zeigt sich vorteilhaft bei der Druckkompensation der Flüssigkeit aus einem flüssigkeitsführenden Heizungs- oder Kühlkreislauf. Veränderungen der Temperatur im flüssigkeitsführenden Heizungs- oder Kühlkreislauf führen zu Volumenverändrungen der Kreislaufflüssigkeit und damit zu Druckänderungen im Kreislauf. Zu hohe Drücke können Undichtheiten sowie zum Ansprechen der Sicherheitsventile bis hin zu Schäden im System und zu niedrige Drücke Ausdampferscheinungen, Lufteinzug und Kavitation, hervorrufen. Durch den Lufteinzug kann der Stickstoffanteil wiederrum zu Fehlfunktionen des Systems sowie Geräuschbildung und der Sauerstoffanteil zu Korrosion führen. Diese Nachteile werden durch das Ausdehnungsgefäss, die bei Volumenzunahme der Kreislaufflüssigkeit dem Kreislauf das Überschussvolumen entnehmen und dieses über das Druckausgleichsventil dem Ausdehnungsgefäss zuleiten, wo die Flüssigkeit unter Luftabschluss und atmosphärischem Druck gelagert wird, und bei Volumenabnahme der Kreislaufflüssigkeit dem Kreislauf das fehlende Volumen aus dem Ausdehnungsgefäss zuführen, wobei in diesem Fall die Einspeisung der Flüssigkeit aus dem Ausdehnungsgefäss vor der Pumpe erfolgt. Beim Zuführen des fehlenden Volumens aus dem Ausdehnungsgefäss tritt ein weiterer synergistischer Effekt der erfindungsgemässen Vorrichtung ein, bei dem die Pumpe verwendet wird um die Flüssigkeit aus dem Ausdehnungsgefäss, welche gegen atmosphärischem Druck gelagert wird, wieder in den flüssigkeitsführenden Heizungs- oder Kühlkreislauf, welcher einen erhöhten Druck aufweist, einzuspeisen.

Vorzugsweise ist mit der Druckausgleichsleitung oder mit dem Entgasungsbehälter eine Niedertemperaturleitung verbunden, die mit dem Kreislauf über ein steuerbares Absperrorgan und einen Wärmeübertrager oder ein Temperaturschichtgefäss verbunden.

Diese Variante der Vorrichtung ermöglicht es, das Ausdehnungsgefäss mit einer Flüssigkeit zu beaufschlagen, dessen Temperatur geringer ist als die Temperatur des flüssigkeitsführenden Heizungs- oder Kühlkreislaufs. Diese Ausführungsform erlaubt die zuverlässige Verwendung eines Materials für den Balg im Ausdehnungsgefäss, das nur für Temperaturen geeignet ist, welche geringer sind, als die Temperatur, die im flüssigkeitsführenden Heizungs- oder Kühlkreislaufs herrscht.

Der Erfindung liegt ebenfalls ein Verfahren zur Entgasung einer Flüssigkeit aus einem flüssigkeitsführenden Heizungs- oder Kühlkreislauf zugrunde, während dem in einem Entgasungszyklus dem Heizungs- oder Kühlkreislauf Flüssigkeit entnommen wird, durch einen Hydrozyklon in einen Entgasungsbehälter gesogen und vom Entgasungsbehälter dem Heizungs- oder Kühlkreislauf wieder zugeleitet wird. Der Druck im Entgasungsbehälter oder in der Vorrichtung wird durch Steuerung der Flüssigkeitszufuhr oder der Flüssigkeitsabfuhr derart reduziert, dass in der Flüssigkeit gelöstes Gas frei wird und in den oberen Teil des Entgasungsbehälters aufsteigt. Durch anschliessende Steuerung der Flüssigkeitszufuhr und/oder der Flüssigkeitsabfuhr wird der Druck im Entgasungsbehälter wieder erhöht. Dadurch wird sich im oberen Teil des Entgasungsbehälters befindliches Gas über eine Entgasungsventileinheit aus dem Entgasungsbehälter ausgeschieden.

Das Verfahren ist insbesondere geeignet zur Entgasung von Wasser oder von Wassergemischen, bevorzugt Gemische aus Wasser und Frostschutzmittel, insbesondere auf Glykolbasierend, insbesondere Propylenglykol und/oder Ethylenglykol. Der Druck innerhalb des flüssigkeitsführenden Heizungs- oder Kühlkreislaufs beträgt 0.2 - 32bar, bevorzugt 1 - 25 bar, insbesondere 1 - 10 bar.

Diese Verfahrensführung ermöglicht eine verbesserte Entgasung der Flüssigkeit aus dem flüssigkeitsführenden Heizungs- oder Kühlkreislauf oder aus der Nachspeiseleitung.

Die Regelung der Flüssigkeitszufuhr oder der Flüssigkeitsabfuhr durch wenigstens eine Pumpe und/oder wenigstens ein steuerbares Absperrorgan. Bevorzugt befindet sich das Absperrorgan in der Ablaufleitung, insbesondere vor oder nach der Pumpe, bevorzugt nach der Pumpe.

Die Steuerung der Flüssigkeitszufuhr oder der Flüssigkeitsabfuhr durch die Pumpe erfolgt bevorzugt durch Regelung des Flüssigkeitsdurchflusses der Pumpe, insbesondere durch Steuerung der Drehzahl der Pumpe.

Weiterhin bevorzugt wird zur Erzeugung von Gasblasen vor dem Hydrozyklon eine Blende oder eine Düse verwendet.

Diese Ausführungsvariante zeigt sich besonders effizient in der Entgasung der Flüssigkeit aus dem flüssigkeitsführenden Heizungs- oder Kühlkreislauf oder der Nachspeiseleitung.

Vorzugsweise wird mithilfe einer Steuereinheit die Gaskonzentration in der Flüssigkeit durch Erfassen des Druckes zwischen einem Rückschlagventil und einer Blende oder einem Überströmventil in der Entgasungsventileinheit und Auswertung des Druckverlaufs während der Entgasungszyklen durch die Steuereinheit ermittelt.

In einer anderen Ausführungsvariante wird mithilfe einer Steuereinheit die Gaskonzentration in der Flüssigkeit durch Erfassen der Menge an ausgeschiedenem Gas mittels eines Gasdurchflussmessers in jedem Entgasungszyklus durch die Steuereinheit ermittelt.

Die hier genannten Varianten können ebenfalls in Kombination untereinander durchgeführt werden.

Im Folgenden wird die erfindungsgemässe Vorrichtung zum Entgasen einer Flüssigkeit unter Bezugnahme auf die beigefügten Zeichnungen anhand von Ausführungsbeispielen detaillierter beschrieben. Es zeigen:
Fig. 1: eine schematische Darstellung eines Ausführungsbeispiels einer erfindungsgemässen Vorrichtung zur Entgasung einer Flüssigkeit aus einem flüssigkeitsführenden Heizungs- oder Kühlkreislauf oder der Nachspeiseleitung zum Heizungs- oder Kühlkreislauf;
Fig. 2: eine schematische Darstellung eines weiteren Ausführungsbeispiels einer erfindungsgemässen Vorrichtung zur Entgasung einer Flüssigkeit aus einem flüssigkeitsführenden Heizungs- oder Kühlkreislauf oder der Nachspeiseleitung zum Heizungs- oder Kühlkreislauf mit einem Ausdehnungsgefäss zum Druckausgleich;
Fig. 3: eine schematische Darstellung eines zweiten Ausführungsbeispiels einer erfindungsgemässen Vorrichtung zur Entgasung einer Flüssigkeit aus einem flüssigkeitsführenden Heizungs- oder Kühlkreislauf oder der Nachspeiseleitung zum Heizungs- oder Kühlkreislauf mit einem Ausdehnungsgefäss zum Druckausgleich;
Fig. 4: eine Querschnittsansicht eines Hydrozyklons mit einem Entgasungsbehälter gemäss einem erfindungsgemässen Ausführungsbeispiel;
Fig. 5: eine Querschnittsansicht eines Hydrozyklons mit einem Entgasungsbehälter im Betrieb gemäss einem erfindungsgemässen Ausführungsbeispiel;

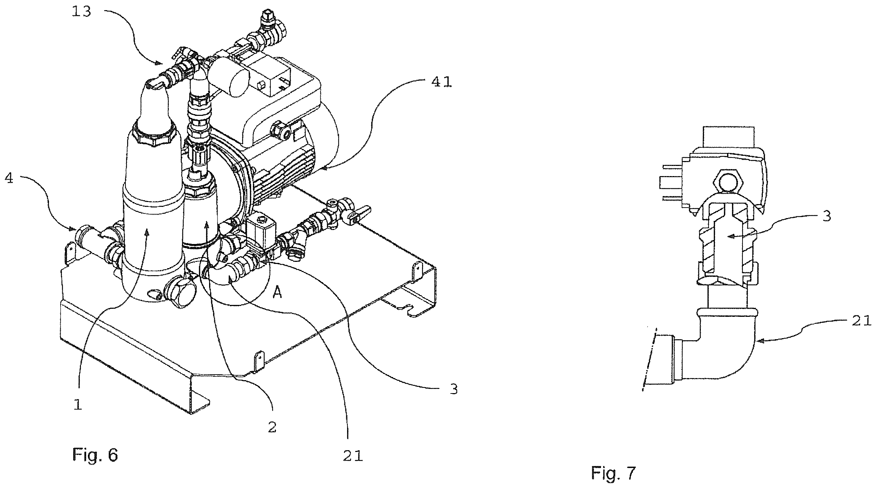

Fig. 6: eine perspektivische Ansicht einer kompakten Bauweise eines Ausführungsbeispiels;
Fig. 7: eine Querschnittsansicht einer Blende in der Zuleitung welche mit einem 90° Winkel versehen ist gemäss dem Ausschnitt A in Fig. 6;

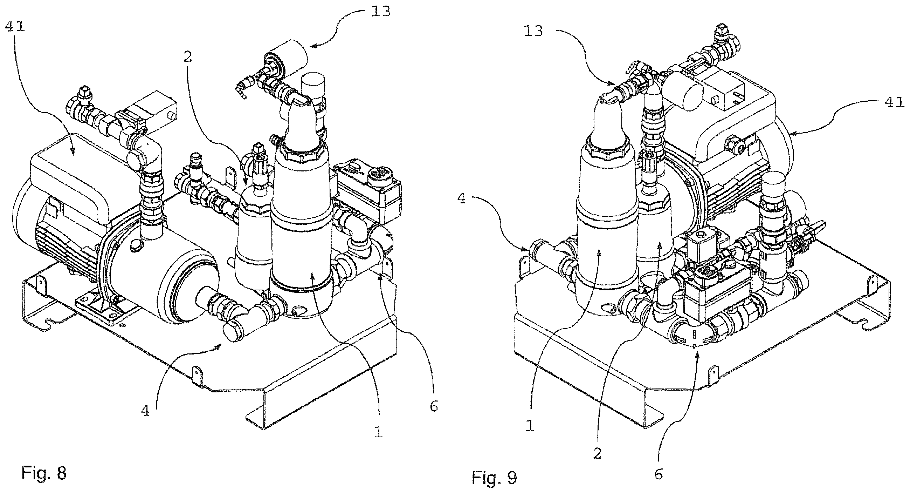

Fig. 8: eine perspektivische Ansicht einer weiteren kompakten Bauweise eines Ausführungsbeispiels mit Anschlüsse für ein Ausdehnungsgefäss;
Fig. 9: eine weitere perspektivische Ansicht der kompakte Bauweise aus Fig. 8;

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

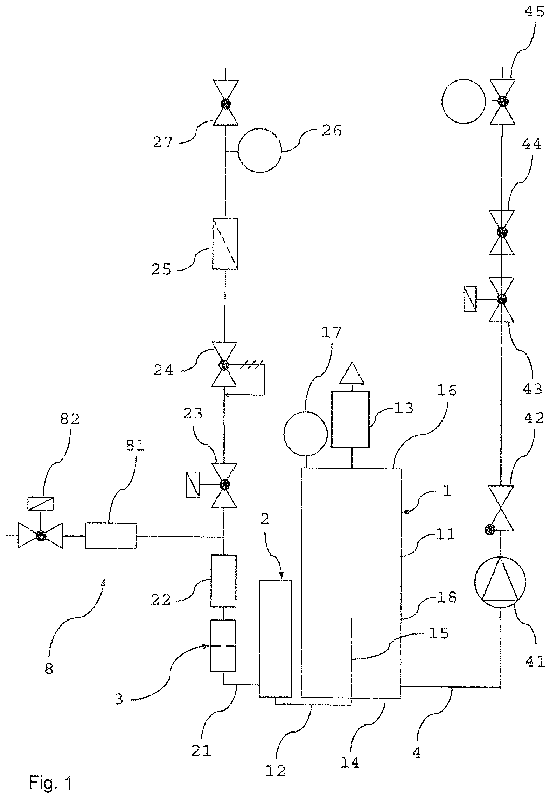

Die in Fig. 1 dargestellte Vorrichtung zur Entgasung einer Flüssigkeit aus einem flüssigkeitsführenden Heizungs- oder Kühlkreislauf oder der Nachspeiseleitung zum Heizungs- oder Kühlkreislauf weist eine Entgasungseinrichtung 1 auf, welche einen im wesentlichen zylinderförmigen, geschlossenen Entgasungsbehälter 11 umfasst. Am Entgasungsbehälterboden 14 ist ein Flüssigkeitseinlass 15 angebracht. Der Flüssigkeitseinlass 15 ist über eine Zuleitung 12 mit einem Hydrozyklon 2 verbunden.

Der Hydrozyklon 2 ist mittels der Speiseleitung 21 mit dem flüssigkeitsführenden Heizungs- oder Kühlkreislauf verbunden, das z.B. ein Heizungs- oder Kühlsystem sein kann oder mit der Nachspeiseleitung. Der Hydrozyklon dient dazu, einen Wirbel mit der zu entgasenden Flüssigkeit zu erzeugen um so die Gasblasen zu bündeln und ggf. zu vergrössern.

Die Speiseleitung 21 ist mit einer Blende 3 versehen, welche dazu dient, die Flüssigkeitszufuhr zum Hydrozyklon 2 derart zu reduzieren, dass eine erhöhte Druckminderung und eine turbulente Strömung an der Blende entsteht und so eine Blasenbildung und Blasenvergrösserung verbessert. Die Blende ist nicht zwingend, wie abgebildet, ausserhalb des Hydrozyklons anzuordnen, sondern kann Teil des Hydrozyklons sein und beispielsweise direkt tangential in den Hydrozyklon einmünden.

Weiterhin weist die Speiseleitung zwischen der Blende und dem flüssigkeitsführenden Heizungs- oder Kühlkreislauf oder der Nachspeiseleitung 8 einen Durchflussbegrenzer 22, der den Durchfluss trotz schwankenden Druckdifferenzen weitestgehend konstant hält. Das Ausführungsbeispiel weist zudem ein weiteres steuerbares Absperrorgan 23, einen Druckminderer 24, einen Filter (Schmutzfänger) 25, einen Drucksensor 26 und ein weiteres Absperrorgan 27 auf. Der Druckminderer 24 ermöglicht es, das Verfahren zur Entgasung mit einem höheren Druck oberhalb von 3 bar absolut, bevorzugt bis zu 25 bar absolut, im flüssigkeitsführenden Heizungs- oder Kühlkreislauf zuverlässig durchzuführen.

Der Entgasungsbehälterboden 14 oder die Seitenwand 18 des Entgasungsbehälters 11 ist ausserdem mit einem Flüssigkeitsauslass versehen, durch den die Flüssigkeit in eine Ablaufleitung 4 strömt. An der Ablaufleitung 4 ist eine Pumpe 41 angeordnet, mittels der dem flüssigkeitsführenden Heizungs- oder Kühlkreislauf zu entgasende Flüssigkeit entnommen, durch die Blende und den Hydrozyklon in den Entgasungsbehälter 11 gesogen und von dort aus dem flüssigkeitsführenden Heizungs- oder Kühlkreislauf wieder zugeleitet wird. Die Ablaufleitung 4 ist zwischen der Pumpe 1 und dem flüssigkeitsführenden Heizungs- oder Kühlkreislauf mit einem Rückschlagventil 42 versehen, das verhindert, dass Flüssigkeit vom flüssigkeitsführenden Heizungs- oder Kühlkreislauf bei einer Unterbrechung oder Reduzierung der geförderten Flüssigkeit zur Pumpe 41 zurückfliesst. Weiter eingezeichnet sind ein steuerbares Absperrorgan 43, ein weiteres Absperrorgan 44 und ein steuerbares Regelventil 45.

Die Entgasungseinrichtung 1 weist eine Entgasungsventileinheit 13 auf. Diese Entgasungsventileinheit 13 kann beispielsweise ein Schwimmerventil und ein Rückschlagventil und gegebenenfalls eine Blende aufweisen und ist bevorzugt am oberen Abschluss 16 des Entgasungsbehälters 11 angebracht. Ebenfalls am oberen Abschluss 16 des Entgasungsbehälters 11 oder alternativ am Hydrozyklon 2 ist ein Drucksensor 17 angebracht, welcher den Druck im Entgasungsbehälter 11 bzw. Hydrozyklon 2 misst.

Die Entgasung, z.B. von Kühl- oder Heizungswasser oder -wassergemisch, erfolgt in nacheinander ausgeführten Entgasungszyklen. In einem Entgasungszyklus wird mittels der Pumpe 41 dem flüssigkeitsführenden Heizungs- oder Kühlkreislauf Flüssigkeit entnommen, durch die Blende und durch den Hydrozyklon 2 in den Entgasungsbehälter 11 gesogen und von dort aus dem flüssigkeitsführenden Heizungs- oder Kühlkreislauf wieder zugeleitet. Alternativ wird Flüssigkeit von der Nachspeiseleitung 8 mithilfe der Pumpe 41 durch die Blende und durch den Hydrozyklon 2 in den Entgasungsbehälter 11 gesogen und von dort aus dem flüssigkeitsführenden Heizungs- oder Kühlkreislauf wieder zugeleitet

In einem ersten Schritt wird der Druck in der Vorrichtung zur Entgasung einer Flüssigkeit reduziert, so dass in der Flüssigkeit gelöstes Gas frei wird. Die Freisetzung des in der Flüssigkeit gelösten Gases in Form von Gasblasen wird durch die Verwendung einer Blende verstärkt. Im Hydrozyklon werden die freigewordenen Gasblasen gebündelt und vergrössert, bevor die Gasblasen-enthaltende Flüssigkeit der Entgasungseinrichtung zugeführt wird. Sobald die Gasblasen-enthaltende Flüssigkeit in die Entgasungseinrichtung gelangt, steigen die Gasblasen in den oberen Teil des Entgasungsbehälters 11 auf und sammeln sich dort an. Der Druck des ausgewichenen Gases reicht nicht aus, um durch die Entgasungsventileinheit 13 entweichen zu können, da im Entgasungsbehälter 11 zu diesem Zeitpunkt Unterdruck herrscht.

Die Reduzierung des Druckes erfolgt durch Steuerung der Flüssigkeitszufuhr und oder der Flüssigkeitsabfuhr, beispielsweise durch Öffnen des Absperrorgans 43 bei gleichzeitig laufender Pumpe 41 oder durch Erhöhung der Fördermenge der Pumpe 41, beispielsweise durch Regelung der Drehzahl der Pumpe 41. Die Blende erzeugt eine verstärkte Gasblasenbildung in der Vorrichtung, wodurch die Entgasung gefördert wird und daher in der erfindungsgemässen Vorrichtung eine verbesserte Entgasung stattfindet.

In einem zweiten Schritt wird der Druck im Entgasungsbehälter 11 wieder erhöht, so dass im oberen Teil des Entgasungsbehälters 11 sich befindliches Gas über die Entgasungsventileinheit 13 aus dem Entgasungsbehälter 11 ausgeschieden wird. Die Erhöhung des Druckes erfolgt erneut durch Steuerung der Flüssigkeitszufuhr und/oder -abfuhr, beispielsweise durch (ggf. partiales) Schliessen des Absperrorgans 43 wobei die Pumpe 41 gleichzeitig weiterlaufen kann, oder durch Reduzierung der Fördermenge der Pumpe 41, beispielsweise durch Regelung der Drehzahl der Pumpe 41 bis hin zum Abschalten der Pumpe 41.

Ein beim plötzlichen Erhöhen des Druckes im Entgasungsbehälter 11 z. B. durch stoppen der Flüssigkeitsabfuhr kann ein Nach-oben-Schwappen der Flüssigkeit im Entgasungsbehälter 11 erfolgen, mit der Folge, dass die Flüssigkeit sich in die Entgasungsventileinheit 13 begeben kann und durch Ablagerung von in der Flüssigkeit gelösten Stoffen das Ventil rasch undicht werden lassen. Um dies zu vermeiden können beispielsweise Schikanen oder andere Elemente in den Entgasungsbehälter 11 oder die Entgasungsventileinrichtung 13 eingebaut werden.

Unter normalen Umständen ist es nicht notwendig, permanent zu entgasen, d.h. praktisch ohne Unterbruch Entgasungszyklus auf Entgasungszyklus folgen zu lassen. Wenn sich nur noch wenig oder nahezu kein Gas mehr in der Flüssigkeit befindet, d.h. wenn die Gaskonzentration in der Flüssigkeit unkritisch ist, kann die Pumpe 41 für einige Zeit abgeschaltet werden, um Energie zu sparen und einen unnötigen Verschleiss der Pumpe zu vermeiden. Das erfindungsgemässe Verfahren zur Entgasung einer Flüssigkeit weist daher in einer bevorzugten Variante eine Umschaltung zwischen Dauerentgasung und temporärer Entgasung auf, wobei bei der temporären Entgasung die Pumpe 41 nur von Zeit zu Zeit läuft. Vorteilhafterweise erfolgt die Umschaltung automatisch in Abhängigkeit der Gaskonzentration in der Flüssigkeit. Zur Ermittlung, ob eine Umschaltung erfolgen soll oder nicht, kann die Gaskonzentration in der Flüssigkeit in direkter oder indirekter Weise bestimmt werden. Die Gaskonzentration in der Flüssigkeit kann über eine Sonde, welche auf Flüssigkeitskontakt reagiert und am Entgasungsbehälter 11 angebracht ist, die ermittelt, ob der Flüssigkeitsstand im Entgasungsbehälter 11 bei Unterdruck die Höhe der Sonde erreicht oder nicht. Die Sonde liefert ihre Messwerte an eine Steuereinheit, die einen Rückschluss auf die Restkonzentration vom Gas in der Flüssigkeit ermöglicht. Um eine Umschaltung in Abhängigkeit der Gaskonzentration in der Flüssigkeit vorzunehmen, ist die Sonde in einer Höhe am Entgasungsbehälter 11 angebracht, die einer Gaskonzentration in der Flüssigkeit entspricht, bei der eine Umschaltung vorgenommen wird. Sinkt der Flüssigkeitsstand im Entgasungsbehälter 11 unter Unterdruck so weit ab, dass die Sonde nicht mehr mit Flüssigkeit in Kontakt ist, erfasst dies die Steuereinheit 40 und gibt den Befehl, dass das in der Flüssigkeit noch reichlich vorhandene Gas weiterhin im Dauerbetrieb ausgeschieden werden soll. Wenn jedoch wenig Gas in der Flüssigkeit gelöst ist, kann sich der Flüssigkeitsspiegel im Entgasungsbehälter 2 nicht mehr oder nur noch sehr wenig absenken, was dazu führt, dass unter Unterdruck die Sonde mit Flüssigkeit umgeben ist. Die Steuereinheit gibt dann den Befehl, dass die Entgasung für eine bestimmte Zeit unterbrochen werden kann.

In einer zweiten Variante wird mittels einer Druckmesseinheit ein erhöhter Druck zwischen dem Rückschlagventil und einer Blende oder einem Überströmventil der Entgasungsventileinheit 13 und die Zeitdauer, während der dieser Druck anhält, gemessen. Die Zeitwerte werden an die Steuereinheit geliefert. Wenn viel Gas im Entgasungsbehälter 11 vorhanden ist und über die Behälterentgasungsventileinheit 13 ausgeschieden wird, d.h. wenn die zu entgasende Flüssigkeit eine hohe Gaskonzentration aufweist, wird der Druck an der Messstelle um ein gewisses Mass ansteigen und eine gewisse Zeit lang vorhanden sein. Bei wenig Gas im Entgasungsbehälter 11 wird der Druck nur sehr wenig oder überhaupt nicht ansteigen. Die Steuereinheit wertet die Messungen dann aus und nimmt entsprechend Umschaltungen zwischen Dauerentgasung und temporärer Entgasung vor.

In einer dritten Variante kann die Druckmesseinheit ein Drucksensor sein, welcher den Druckverlauf zwischen dem Rückschlagventil und der Blende oder dem Überströmventil speichert und in einer Steuereinheit ausgewertet.

In einer vierten Variante wird mittels eines Gasdurchflussmessers die Menge an ausgeschiedenem Gas in jedem Entgasungszyklus gemessen. Die Messwerte werden an die Steuereinheit weitergegeben.

In einer fünften Variante wird mittels eines Drucksensors 17 am Entgasungsbehälter der Druck des Gases oberhalb der Flüssigkeit im Entgasungsbehälter 11 gemessen und ebenfalls an die Steuereinheit weitergegeben.

In jedem Fall kann zudem eine genaue Messung der Gaskonzentrationen in der Flüssigkeit vorgenommen werden, indem verschiedene Parameter in der Steuereinheit verarbeitet werden.

Durch das Ausscheiden von Gas oder anderen Ausscheidungen verliert die im flüssigkeitsführenden Heizungs- oder Kühlkreislauf enthaltene Flüssigkeit an Volumen. Dieser Volumenverlust kann durch Zufügung von Flüssigkeit von aussen über eine Nachspeiseleitung 8 kompensiert werden. Die Nachspeiseleitung B mündet bei der dargestellten Vorrichtung in die Speiseleitung 21, so dass die frisch zugefügte Flüssigkeit noch vor dem Einführen in den flüssigkeitsführenden Heizungs- oder Kühlkreislauf entgast wird. Sie kann aber auch auf viele andere Arten angeordnet werden und beispielsweise in den Entgasungsbehälter 11, die Ablaufleitung 4 oder direkt in den flüssigkeitsführenden Heizungs- oder Kühlkreislauf münden. Die Nachspeiseleitung 8 ist mit einem Durchflusszähler 81 und einem Absperrorgan 82 versehen, das vorzugsweise ein steuerbares Magnetventil ist.

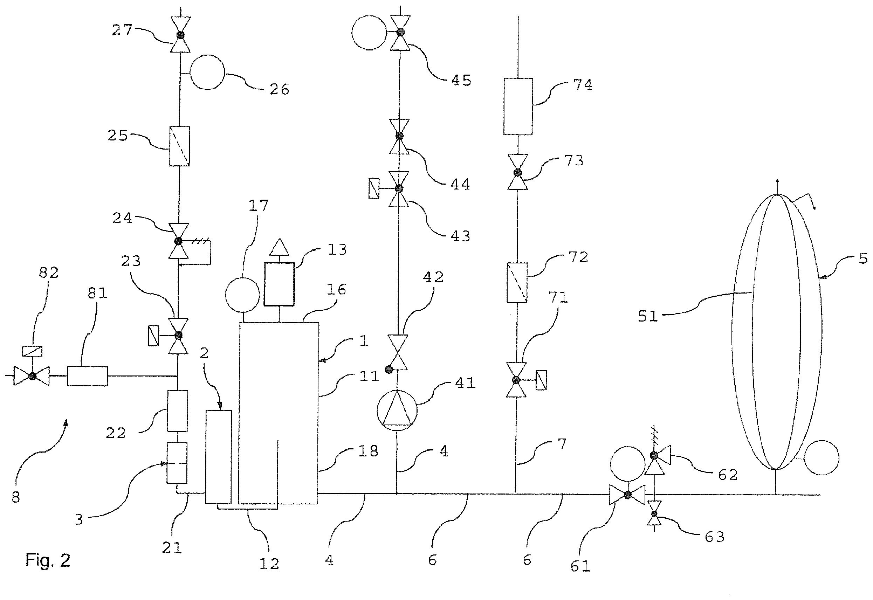

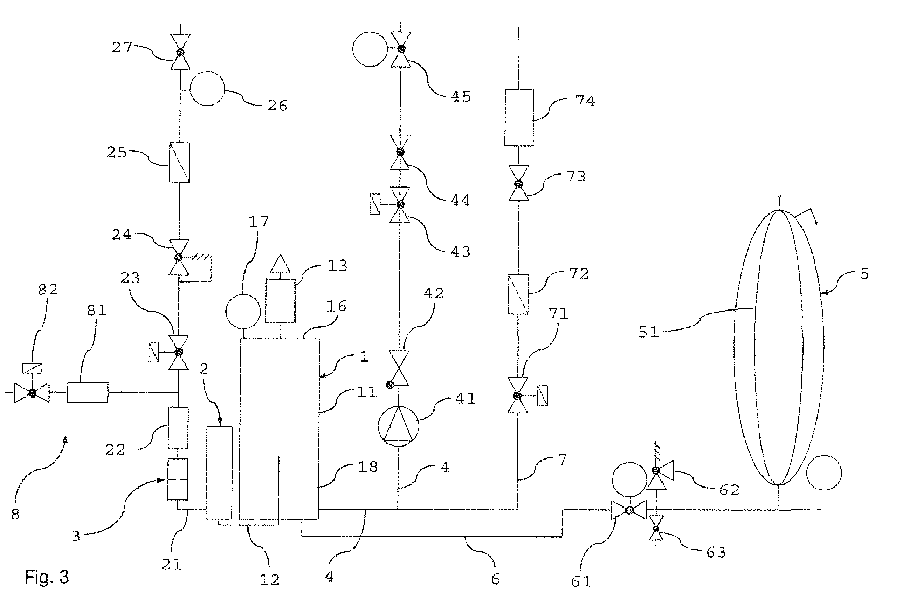

Fig. 2 und Fig. 3 zeigen zwei Varianten einer druckkompensierten Entgasungsvorrichtung. Zu diesem Zwecke umfasst die Vorrichtung zusätzlich ein Ausdehnungsgefäss 5 mit einem Balg 51 zur Aufnahme von Flüssigkeit. In den Figuren 2 und 3 ist ein Ausdehnungsgefäss 5 zum Druckausgleich mit einem Balg 51 zur Aufnahme von Flüssigkeit mit dem flüssigkeitsführenden Heizungs- oder Kühlkreislauf über eine Druckausgleichsleitung 6, welche ein Druckausgleichsventil 61 umfasst, verbunden. Bei Volumenzunahme der Kreislaufflüssigkeit wird dem Kreislauf über die Niedertemperaturleitung 7, welche ein steuerbares Absperrorgan 71, einen Schmutzfilter 72, ein weiteres Absperrorgan 73 und einen Wärmeübertrager oder ein Temperaturschichtgefäss 74 aufweist, das Überschussvolumen entnommen. Die Flüssigkeit, die über die Niedertemperaturleitung 7 entnommen wird kann entweder direkt über die Druckausgleichsleitung 6 dem Ausdehnungsgefäss 5 zugeführt werden, oder über die Ablaufleitung 4 durch die Entgasungseinrichtung 1 und anschliessend der Druckausgleichsleitung 6 in das Ausdehnungsgefäss gelangen. Somit kann das Ausdehnungsgefäss 5 mit abgekühlter Flüssigkeit mit einer Temperatur von beispielsweise weniger als 70°C beaufschlagt werden. Diese Ausführungsform erlaubt die zuverlässige Verwendung eines Materials für den Balg im Ausdehnungsgefäss, das bei höheren Temperaturen beispielsweise oberhalb von 70°C eine höhere Permeabilität gegenüber Gase, insbesondere Sauerstoff oder Stickstoff aufweisen. Geeignet ist, zum Beispiel, auch Butylkautschuk (IIR), welche bei geringerer Temperatur von beispielsweise weniger als 70°C ausreichend geringe Permeabilität gegenüber Gase wie Sauerstoff und Stickstoff aufweisen. Die Nachteile einer Diffusion dieser Gase in die Flüssigkeit wurden bereits erwähnt. Die überschüssige Flüssigkeit wird über ein Druckausgleichsventil dem Ausdehnungsgefäss 5 zugeleitet, wo die Flüssigkeit unter Luftabschluss und atmosphärischem Druck gelagert wird.

Bei Volumenabnahme der Kreislaufflüssigkeit kann die Flüssigkeit dem Kreislauf wieder zugeführt werden, um das fehlende Volumen zu kompensieren. Dies erfolgt entweder über die Ablaufleitung 4 (Fig. 2) oder durch einleiten in die Entgasungseinrichtung 1 (Fig. 3). In beiden Fällen ist die Druckausgleichsleitung zum Zwecke der Zuleitung von Flüssigkeit aus dem Ausdehnungsgefäss vor der Pumpe mit der Vorrichtung verbunden. In diesem Fall wird die Pumpe genutzt um die Flüssigkeit aus dem Ausdehnungsgefäss, welche gegen atmosphärischem Druck gelagert wird, wieder in den flüssigkeitsführenden Heizungs- oder Kühlkreislauf, welcher einen erhöhten Druck aufweist, einzuspeisen.

An der Druckausgleichsleitung 6 ist zudem ein Sicherheitsventil 62 angeordnet. Weiter eingezeichnet ist ein Absperrorgan 63 zum Ablassen von Flüssigkeit aus dem Ausdehnungsgefäss.

Insbesondere wenn die Temperatur der Flüssigkeit im Heizungs- oder Kühlkreislauf oberhalb einer bestimmten Solltemperatur ist, beispielsweise oberhalb von 70°C, und der gewünschte Betriebsdruck im Heizungs- oder Kühlkreislauf um einen bestimmten Toleranzwert überschritten wird, schliesst sich das steuerbare Ventil 23. Das steuerbare Ventil 71 in der Niedertemperaturleitung 7 und das Druckausgleichsventil 61 öffnen sich, so dass abgekühlte Kreislaufflüssigkeitaus dem Wärmeübertrager oder dem Temperaturschichtgefäss 74 in das Ausdehnungsgefäss 5 fliesst. Der Wärmeübertrager ist in einer besonderen Ausführungsform ein Behälter, der in thermischem Kontakt mit der kühleren Umgebung ist. Sobald sich der Druck ausreichend gesenkt hat, schliessen das steuerbare Ventil 71 in der Niedertemperaturleitung 7 und das Druckausgleichsventil 61 wieder. Anschliessend kann das Ventil 23 wieder geöffnet werden und der Entgasungsvorgang kann wieder fortgeführt werden. Wenn anderseits der Betriebsdruck um einen bestimmten Toleranzwert unterschritten wird, wird solange das Ventil 23 geschlossen und das Druckausgleichsventil 61 geöffnet und damit Flüssigkeit vom Ausdehnungsgefäss über die Pumpe 41 in den Heizungs- oder Kühlkreislauf gefördert, bis der Druck im flüssigkeitsführenden Heizungs- oder Kühlkreislauf genügend erhöht ist. Anschliessend kann der Entgasungsvorgang erneut fortgeführt werden. Diese Sequenz an Ventilsteuerung ermöglicht eine integrierte Lösung bei welcher beide Vorgänge abwechselnd in einer Vorrichtung durchgeführt werden können.

Die vorliegende Vorrichtung ermöglicht zudem eine weitere Verfahrensvariante zum Druckausgleich im Heizungs- oder Kühlkreislauf durch Aufnahme des Expansionsvolumens der Flüssigkeit wenn die Temperatur der Flüssigkeit im Heizungs- oder Kühlkreislauf unterhalb einer bestimmten Solltemperatur ist, beispielsweise unterhalb von 70°C und der gewünschte Betriebsdruck im Heizungs- oder Kühlkreislauf um einen bestimmten Toleranzwert überschritten wird. In diesem Fall bleibt das steuerbare Ventil 23 offen und das steuerbare Ventil 71 in der Niedertemperaturleitung 7 kann zusätzlich geöffnet werden. Das Druckausgleichsventil 61 öffnet sich, so dass Kreislaufflüssigkeitaus direkt aus dem Heizungs- oder Kühlkreislauf in das Ausdehnungsgefäss 5 fliesst. Sobald sich der Druck ausreichend gesenkt hat, schliesst das Druckausgleichsventil 61 sowie das steuerbare Ventil 71 wieder und der Entgasungsvorgang kann wieder fortgeführt werden. Wenn anderseits der Betriebsdruck in dieser Verfahrensvariante um einen bestimmten Toleranzwert unterschritten wird, wird solange das Ventil 23 und falls vorhanden das Ventil 71 geschlossen und das Druckausgleichsventil 61 geöffnet und damit Flüssigkeit vom Ausdehnungsgefäss über die Pumpe 41 in den Heizungs- oder Kühlkreislauf gefördert, bis der Druck im flüssigkeitsführenden Heizungs- oder Kühlkreislauf genügend erhöht ist. Anschliessend kann auch hier der Entgasungsvorgang erneut fortgeführt werden.

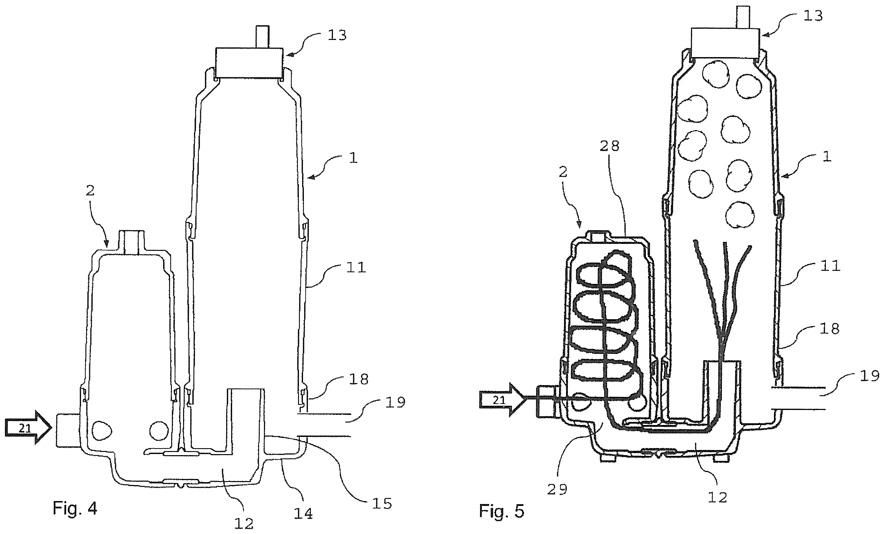

Fig. 4 zeigt einen Querschnitt durch eine Einheit welche durch den Entgasungsbehälter und den Hydrozyklon gebildet wird. Die dargestellte Vorrichtung weist eine im Wesentlichen zylinderförmigen Entgasungsbehälter 11 auf. Am Behälterboden 14 ist ein Flüssigkeitseinlass 15 angebracht, der in das Innere des Entgasungsbehälters 11 hineinragt, so dass einströmende Flüssigkeit gut verteilt wird. Der Flüssigkeitseinlass 15 ist über eine Zuleitung 12 mit dem Hydrozyklon 2 verbunden. Der Hydrozyklon 2 wird ebenfalls durch einen im Wesentlichen zylinderförmigen Behälter gebildet. An seinem Unteren Ende ist der Hydrozyklon seitlich tangential mit der Speiseleitung 21 verbunden. Ebenfalls am unteren Ende ist mittig der Abfluss angeordnet, der mit der Zuleitung 12 mit dem Entgasungsbehälter 11 verbunden ist.

Figur 5 illustriert die Funktionsweise der Einheit, die durch den Hydrozyklon und den Entgasungsbehälter gebildet wird.

Die zu entgasende Flüssigkeit strömt im unteren Teil tangential in den Hydrozyklon 2 ein, bewegt sich in einer rotierenden Bewegung an der Wand nach oben und wird dort nach unten umgeleitet. Am unteren Ende des Hydrozyklons 2 wird dann die Flüssigkeit über die Ableitung 29 abgeleitet. Die Kammer des Hydrozyklons 2 kann hierbei einen gleichen Durchmesser über deren gesamten Länge aufweisen oder aber eine konische Form aufzeigen. Auch wenn sich die Beschreibung auf einen senkrecht relativ zur Lotrichtung angeordneten Hydrozyklon bezieht, und somit die Richtungen oben und unten zu Verständniszwecken definiert, ist das Betreiben des Verfahrens von der relativen Position des Hydrozyklons zur Lotrichtung weitestgehend unabhängig und das Hydrozyklon kann jegliche Position einnehmen, beispielsweise auch horizontal.

Je größer die Dichtedifferenz zwischen der Gasblase und dem umgebenden Medium und je größer der Partikeldurchmesser sind, desto schneller bewegen sich die Partikel in radialer Richtung, in welche die Zentrifugalkraft wirkt. Gase haben eine spezifische Dichte welche deutlich kleiner ist als die Dichte der Flüssigkeit beträgt. Das führt dazu, dass sich gasarme Flüssigkeit an der Innenwand des Hydrozyklons ansammelt und der von der Mitte abgezogene Volumenstrom reich an gebündelten Gasblasen ist, welche Gasblasen sich auch durch das Verweilen sowie durch die agierenden Kräfte im Hydrozyklon vergrössern.

Durch den tangentialen Eintritt in das zylindrische Segment wird die Flüssigkeit auf eine Kreisbahn gezwungen und strömt in einem aufwärtsgerichteten Wirbel nach oben. Durch die obere Abdeckung 28 des Hydrozyklons 2 wird der Wirbel, welcher Flüssigkeit und Gasblasen umfasst, umgeleitet und durch die Mitte des Hydrozyklons 2 wieder nach unten geleitet. Diese Flüssig-/Gasmischung verlässt dann den Hydrozyklon 2 bei Erreichen dessen unteren Endes über die Ableitung 29.

Die Flüssigkeit inklusive gebündelter Gasblasen als Flüssig-/Gasgemisch, welche durch die Ableitung 29 austritt wird anschliessend über diese Zuleitung 12 der Entgasungseinrichtung 1 zugeführt.

Durch die Erfindungsgemässe Vorrichtung und das erfindungsgemässe Verfahren wird eine deutlich erhöhte Entgasungseffizienz erzielt, welche beispielsweise dazu führt, dass das Volumen des Entgasungsbehälters beispielsweise um das Fünffache verringert werden kann. Das Verfahren kann ohne separater Vakuumpumpe zuverlässig betrieben werden.

## Patentansprüche

1. Vorrichtung zur Entgasung einer Flüssigkeit aus einem flüssigkeitsführenden Heizungs- oder Kühlkreislauf oder einer Nachspeiseleitung zum Heizungs- oder Kühlkreislauf, umfassend eine Entgasungseinrichtung (1) zur Entfernung von Gas aus einer Flüssigkeit durch abwechselnde Unterdruck- und Überdruckerzeugung, wobei die Entgasungseinrichtung (1) einen Entgasungsbehälter (11) umfasst, eine Zuleitung (12) zum Zuführen der Flüssigkeit zum Entgasungsbehälter (11), eine Ablaufleitung (4) zum Abführen der Flüssigkeit vom Entgasungsbehälter (11), welche Ablaufleitung (4) eine Pumpe (41) aufweist und mit dem Heizungs- oder Kühlkreislauf verbindbar ist, und eine Entgasungsventileinheit (13), die das Ausscheiden von Gas aus dem Entgasungsbehälter (11) ermöglicht, jedoch das Hindurchströmen der Flüssigkeit aus dem Entgasungsbehälter (11) sowie den Rückfluss von Gas bei Unterdruck im Entgasungsbehälter (11) verhindert,
**dadurch gekennzeichnet, dass** die Vorrichtung einen Hydrozyklon (2) zur Erzeugung einer Wirbelströmung der Flüssigkeit umfasst, wobei der Hydrozyklon (2) einerseits mit der Entgasungseinrichtung (1) und andererseits mit einer Speiseleitung (21) zum Zuführen der Flüssigkeit verbunden ist, welche Speiseleitung (21) mit dem Heizungs- oder Kühlkreislauf oder mit der Nachspeiseleitung (8) verbindbar ist, und eine Steuereinheit (41, 43) zur Steuerung der Flüssigkeitszufuhr oder der Flüssigkeitsabfuhr umfasst.

2. Vorrichtung gemäss Anspruch 1, **dadurch gekennzeichnet, dass** in der Speiseleitung (21) eine Querschnittseduzierung (3), bevorzugt eine Blende oder eine Düse, zur Gasblasenerzeugung vorhanden ist.

3. Vorrichtung gemäss Anspruch 2, **dadurch gekennzeichnet, dass** die Speiseleitung (21) zwischen der Querschnittsreduzierung (3), der Blende oder der Düse, und dem Hydrozyklon (2) einen Winkel von wenigstens 60° aufweist, bevorzugt einen Winkel von 70° bis 120°.

4. Vorrichtung gemäss einem der Ansprüche 1 bis 3, **dadurch gekennzeichnet, dass** sie wenigstens ein Ausdehnungsgefäss (5) zum Druckausgleich mit einem Balg (51) zur Aufnahme von Flüssigkeit aufweist, das über eine Druckausgleichsleitung (6), welche ein steuerbares Absperrorgan (61) umfasst, mit dem Entgasungsbehälter (1) oder mit der Ablaufleitung (4) verbunden ist.

5. Vorrichtung gemäss Anspruch 4, **dadurch gekennzeichnet, dass** mit der Druckausgleichsleitung (6) oder mit dem Entgasungsbehälter (1) eine Niedertemperaturleitung (7) verbunden ist, die mit dem Heizungs- oder Kühlkreislauf über ein steuerbares Absperrorgan (71) und einen Wärmeübertrager oder ein Temperaturschichtgefäss (74) verbunden ist.

6. Verfahren zur Entgasung einer Flüssigkeit aus einem flüssigkeitsführenden Heizungs- oder Kühlkreislauf oder einer Nachspeiseleitung zum Heizungs- oder Kühlkreislauf, **dadurch gekennzeichnet, dass** in einem Entgasungszyklus dem Heizungs- oder Kühlkreislauf oder der Nachspeiseleitung Flüssigkeit entnommen wird, durch einen Hydrozyklon (2) in einen Entgasungsbehälter (11) gesogen und vom Entgasungsbehälter (11) dem Heizungs- oder Kühlkreislauf wieder zugeleitet wird, der Druck durch Regelung der Flüssigkeitszufuhr oder der Flüssigkeitsabfuhr derart reduziert wird, dass in der Flüssigkeit gelöstes Gas frei wird und in den oberen Teil des Entgasungsbehälters (11) aufsteigt, und anschliessend durch Steuerung der Flüssigkeitszufuhr und/oder der Flüssigkeitsabfuhr der Druck im Entgasungsbehälter (11) wieder erhöht und dadurch im oberen Teil des Entgasungsbehälters (11) sich befindliches Gas über eine Entgasungsventileinheit (13) aus dem Entgasungsbehälter ausgeschieden wird, wobei die Regelung der Flüssigkeitszufuhr oder der Flüssigkeitsabfuhr durch wenigstens eine Pumpe (41) und/oder wenigstens ein steuerbares Absperrorgan (43) erfolgt.

7. Verfahren gemäss Anspruch 6, **dadurch gekennzeichnet, dass** zur Erzeugung von Gasblasen vor dem Hydrozyklon (2) eine Blende (3) oder eine Düse verwendet wird.

8. Verfahren gemäss einem der Ansprüche 6 bis 7, **dadurch gekennzeichnet, dass** mithilfe einer Steuereinheit die Gaskonzentration in der Flüssigkeit durch Erfassen des Druckes zwischen einem Rückschlagventil und einer Blende oder einem Überströmventil in der Entgasungsventileinheit (13) und Auswertung des Druckverlaufs während der Entgasungszyklen durch die Steuereinheit ermittelt wird.

9. Verfahren gemäss einem der Ansprüche 6 bis 7, **dadurch gekennzeichnet, dass** mithilfe einer Steuereinheit die Gaskonzentration in der Flüssigkeit durch Erfassen der Menge an ausgeschiedenem Gas mittels eines Gasdurchflussmessers in jedem Entgasungszyklus durch die Steuereinheit ermittelt wird.

## Claims

1. Device for degassing a liquid from a liquid-conveying heating or coolant circuit or a make-up line to the heating or coolant circuit, comprising a degassing device (1) for removing gas from a liquid by alternately generating negative pressure and overpressure, wherein the degassing device (1) comprises a degassing vessel (11), a feed line (12) for feeding the liquid to the degassing vessel (11), a discharge line (4) for removing the liquid from the degassing vessel (11), which discharge line (4) has a pump (41) and can be connected to the heating or coolant circuit, and a degassing valve unit (13), which enables the withdrawal of gas from the degassing vessel (11), but prevents the throughflow of liquid from the degassing vessel (11) and the return flow of gas if there is negative pressure in the degassing vessel (11), **characterised in that** the device comprises a hydrocyclone (2) for generating a vortex flow of liquid, wherein the hydrocyclone (2) is connected on the one hand to the degassing device (1) and on the other hand to a feed line (21) for supplying the liquid, which feed line (21) can be connected to the heating or coolant circuit or to the make-up line (8), and comprises a control unit (41, 43) for controlling the fluid supply or fluid removal.

2. Device according to claim 1, **characterised in that** there is a cross-sectional reduction (3), preferably an aperture or a nozzle, in the feed line (21) for generating gas bubbles.

3. Device according to claim 2, **characterised in that** the feed line (21) between the cross-sectional reduction (3), the aperture or the nozzle, and the hydrocyclone (2) has an angle of at least 60°, preferably an angle of 70° to 120°.

4. Device according to any of claims 1 to 3, **characterised in that** it has at least one expansion vessel (5) for equalising the pressure with a bellows (51) for receiving liquid, which is connected via a pressure equalisation line (6), which comprises a controllable shut-off organ (61), to the degassing vessel (1) or to the discharge line (4).

5. Device according to claim 4, **characterised in that** the pressure equalisation line (6) or the degassing vessel (1) is connected to a low temperature line (7), which is connected to the heating or coolant circuit via a controllable shut-off organ (71) and a heat exchanger or a temperature layer vessel (74).

6. Method for degassing a liquid from a liquid-conveying heating or coolant circuit or a make-up line to the heating or coolant circuit, **characterised in that**, in a degassing cycle, liquid is removed from the heating or coolant circuit or the make-up line, is suctioned by a hydrocyclone (2) into a degassing vessel (11) and, from the degassing vessel (11), is returned again to the heating or coolant circuit, the pressure is reduced by controlling the liquid supply or the liquid removal such that gas dissolved in the liquid is released and rises into the upper part of the degassing vessel (11) and then, by controlling the liquid supply and/or the liquid removal, the pressure in the degassing vessel (11) is increased again and thereby gas located in the upper part of the degassing vessel (11) is removed via a degassing valve unit (13) from the degassing vessel, wherein the supply of liquid or the removal of liquid is controlled by at least one pump (41) and/or at least one controllable shut-off organ (43).

7. Method according to claim 6, **characterised in that** an aperture (3) or a nozzle is used for generating gas bubbles before the hydrocyclone (2).

8. Method according to any of claims 6 to 7, **characterised in that** the gas concentration in the liquid is determined by means of a control unit by detecting the pressure between a non-return valve and an aperture or an overflow valve in the degassing valve unit (13) and evaluating the pressure during the degassing cycles by means of the control unit.

9. Method according to any of claims 6 to 7, **characterised in that** the gas concentration in the liquid is determined by means of a control unit by detecting the amount of eliminated gas by means of a gas flowmeter in each degassing cycle by means of the control unit.

## Revendications

1. Dispositif de dégazage d'un liquide provenant d'un circuit de chauffage ou de refroidissement menant un liquide ou d'une conduite de réalimentation vers le circuit de chauffage ou de refroidissement, comportant un moyen de dégazage (1) pour enlever du gaz hors d'un liquide par génération alternante d'une dépression et d'une surpression,
dans lequel
le moyen de dégazage (1) comprend un récipient de dégazage (11), une conduite d'amenée (12) pour amener le liquide vers le récipient de dégazage (11), une conduite d'évacuation (4) pour évacuer le liquide hors du récipient de dégazage (11), la conduite d'évacuation (4) comprend une pompe (41) et peut être reliée au circuit de chauffage ou de refroidissement, et une unité à vanne de dégazage (13) permettant l'extraction de gaz hors du récipient de dégazage (11) mais empêchant le passage du liquide depuis le récipient de dégazage (11) ainsi que le retour du gaz en cas de dépression dans le récipient de dégazage (11),
**caractérisé en ce que**
le dispositif comprend un hydrocyclone (2) pour engendrer un écoulement tourbillonnaire du liquide, l'hydrocyclone (2) étant relié d'une part au moyen de dégazage (1) et d'autre part à une conduite d'alimentation (21) pour amener le liquide, ladite conduite d'alimentation (21) pouvant être reliée au circuit de chauffage ou de refroidissement ou à la conduite de réalimentation (8), et comportant une unité de commande (41, 43) pour commander l'amenée de liquide ou l'évacuation de liquide.

2. Dispositif selon la revendication 1, **caractérisé en ce que** dans la conduite d'alimentation (21) est prévue une réduction de section transversale (3), de préférence un diaphragme ou une buse, pour générer des bulles de gaz.

3. Dispositif selon la revendication 2, **caractérisé en ce que** la conduite d'alimentation (21) présente un angle d'au moins 60°, de préférence un angle de 70° à 120°, entre la réduction de section transversale (3), le diaphragme ou la buse, et l'hydrocyclone (2).

4. Dispositif selon l'une des revendications 1 à 3, **caractérisé en ce qu'**il comprend au moins un vase d'expansion (5) pour la compensation de pression avec un soufflet (51) pour recevoir du liquide, qui est relié au récipient de dégazage (1) ou à la conduite d'évacuation (4) par une conduite de compensation de pression (6) qui comprend un organe d'arrêt (61) pilotable.

5. Dispositif selon la revendication 4, **caractérisé en ce qu'**une conduite (7) à basse température qui est reliée au circuit de chauffage ou de refroidissement via un organe d'arrêt (71) pilotable et à un échangeur de chaleur ou à un vase de stratification de température (74) est reliée à la conduite de compensation de pression (6) ou au récipient de dégazage (1).

6. Procédé de dégazage d'un liquide provenant d'un circuit de chauffage ou de refroidissement menant un liquide ou d'une conduite de réalimentation vers le circuit de chauffage ou de refroidissement,
**caractérisé en ce que**
dans un cycle de dégazage, du liquide est prélevé hors du circuit de chauffage ou de refroidissement ou hors de la conduite de réalimentation, il est aspiré à travers un hydrocyclone (2) jusque dans un récipient de dégazage (11) et il est ramené depuis le récipient de dégazage (11) jusqu'au circuit de chauffage ou de refroidissement, la pression est réduite par régulation de l'alimentation en liquide ou de l'évacuation de liquide, de telle sorte que le gaz dissous dans le liquide se dégage et monte jusque dans la partie supérieure du récipient de dégazage (11), et ensuite la pression dans le récipient de dégazage (11) est de nouveau augmentée par commande de l'alimentation en liquide et/ou de l'évacuation de liquide, moyennant quoi le gaz situé dans la partie supérieure du récipient de dégazage (11) est extrait hors du récipient de dégazage via une unité de vanne de dégazage (13), la régulation de l'alimentation de liquide ou de l'évacuation de liquide s'effectuant par au moins une pompe (41) et/ou par au moins un organe d'arrêt (43) pilotable.

7. Procédé selon la revendication 6, **caractérisé en ce que** pour générer des bulles de gaz, un diaphragme (3) ou une buse est utilisé(e) en avant de l'hydrocyclone (2).

8. Procédé selon l'une des revendications 6 à 7, **caractérisé en ce qu'**à l'aide d'une unité de commande, la concentration en gaz dans le liquide est déterminée par l'unité de commande par détection de la pression entre un clapet anti-retour et un diaphragme ou une vanne de trop-plein dans l'unité de vanne de dégazage (13) et par évaluation de l'évolution de pression pendant les cycles de dégazage.

9. Procédé selon l'une des revendications 6 à 7, **caractérisé en ce qu'**à l'aide d'une unité de commande, la concentration en gaz dans le liquide est déterminée par l'unité de commande par détection d'une quantité de gaz extrait au moyen d'un débitmètre de gaz dans chaque cycle de dégazage.
